# EUROPÄISCHE PATENTSCHRIFT

(11) **EP 0 840 667 B1**
(45) Veröffentlichungstag und Bekanntmachung des Hinweises auf die Patenterteilung: **17.03.1999**
(21) Anmeldenummer: 96927523.9
(22) Anmeldetag: 23.07.1996
(51) Int. Cl.: B25B 27/16, B25B 23/08, B23P 19/06

(54) **MONTAGEHILFSKÖRPER FÜR MASCHINENTEILE, INSBESONDERE FÜR GEHÄUSEVERSCHLUSSDECKEL**
ASSEMBLY AID FOR MACHINE PARTS, IN PARTICULAR FOR HOUSING CLOSURE UNITS
SYSTEME D'AIDE AU MONTAGE POUR PIECES MECANIQUES, NOTAMMENT POUR COUVERCLES DE CARTER

(30) Priorität: 25.07.1995 DE 19527042
(43) Veröffentlichungstag der Anmeldung: 13.05.1998
(73) Patentinhaber: CR Elastomere GmbH, 51379 Leverkusen (DE)
(72) Erfinder: VOM STEIN, Hans-Joachim, D-51377 Leverkusen (DE)
(74) Vertreter: Glanz, Werner
(86) Internationale Anmeldenummer: DE9601397
(87) Internationale Veröffentlichungsnummer: WO9704923

(56) Entgegenhaltungen:
- EP-A- 0 272 775
- US-A- 3 316 949
- PATENT ABSTRACTS OF JAPAN vol. 8, no. 136 (M-304) [1573] , 23.Juni 1984 & JP,A,59 037024 (HITACHI SEISAKUSHO), 29.Februar 1984,

## Beschreibung

Die Erfindung betrifft einen Montagehilfskörper für Maschinenteile, die mittels zusätzlicher Befestigungsmittel mit der Maschine zu verbinden sind, bestehend aus einem mit dem Maschinenteil leicht lösbar verbindbaren Hilfskörper, der nach der Montage des Maschinenteils entfernbar ist. Insbesondere betrifft die Erfindung einen Montagehilfskörper für Gehäuseverschlußdeckel mit integriertem Radialwellendichtring und Durchgangslöchern für Befestigungsschrauben, insbesondere für Kurbelwellen-, Nockenwellen- und Getriebegehäuse von Brennkraftmaschinen, bestehend aus einem im wesentlichen radial sich erstreckenden Grundkörper mit mindestens einem axial sich erstreckenden ringförmigen Ansatz zur zentrischen Aufnahme des Gehäuseverschlußdeckels.

Für die Montage von Maschinenteilen ist es erforderlich, daß das jeweils zu montierende Maschinenteil in ausgerichteter Lage der Maschine zugeführt und dann damit verbunden wird. Die Verbindung solcher Maschinenteile erfolgt vielfach durch Zuhilfenahme von meist genormten Befestigungselementen, wie Niete, Schrauben. Spannstifte etc. Während im Großmaschinenbau das Zusammenfügen der Maschinenteile meist manuell, gegebenenfalls mittels spezieller Haltewerkzeuge, erfolgt, wobei m nach dem Zusammenfügen die Befestigungsmittel einzeln und meistens von Hand in ihre Befestigungsposition gebracht werden, stellt die Massenproduktion von Maschinengehäusen, wie zum Beispiel Elektromotoren, Brennkraftmaschinen, Schaltgetrieben etc., besondere Anforderungen an eine automatische Montage-Möglichkeit.

Vor allem im Kraftfahrzeugbau werden beispielsweise Gehäuseverschlußdeckel, die mittels mehrerer Schrauben am Motoren- oder Getriebegehäuse zu befestigen sind, mittels automatischer Werkzeuge, wie z.B. Industrie-Roboter, sowohl der Montagestelle zugeführt als auch dort positioniert und verschraubt. Dazu ist es notwendig, daß die Gehäuseverschlußdeckel in lageorientierter Position aus einem Magen entnehmbar und dem Motoren- bzw. Getriebegehäuse zuführbar sind, wobei die Befestigungsschrauben möglichst ebenfalls zusammen mit dem Gehäuseverschlußdeckel in ausgerichteter Lage zugeführt werden müssen.

In der DE-PS DE 42 17 131 wird ein Gehäuseverschlußdeckel für Kurbelwellengehäuse von Brennkraftmaschinen beschrieben, bei dem die Befestigungsschrauben in den Schraubendurchgangsbohrungen des Gehäuseverschlußdeckels kraftschlüssig gehalten werden, so daß beim Zuführen des Gehäuseverschlußdeckels zwecks Verbindung mit dem Kurbelwellengehäuse die Befestigungsschrauben automatisch mit in die Schraubposition gebracht werden. Hierbei sind zwar die Schrauben für die Montage des Gehäuseverschlußdeckels direkt verfügbar. Problematisch ist jedoch das Kraftschlüssige Verbinden der Schrauben in den Bohrungen des Gehäuseverschlußdeckels sowie das notwendige Ausrichten der Schrauben in Richtung auf die Gewindelöcher des Maschinengehäuses beim Montagevorgang. Darüber hinaus sind die so mit Schrauben bestückten Gehäuseverschlußdeckel nicht stapelbar und somit für ein automatisches Ergreifen mittels Industrie-Roboter nicht geeignet.

Schließlich ist bei Gehäuseverschlußdeckeln mit im Einbauzustand durch den Deckel sich erstreckender Welle, die einer zusätzlichen Abdichtung bedarf, die automatische Montage dadurch erschwert, daß die Dichtlippe des in dem Gehäuseverschlußdeckel integrierten Radialwellendichtringes beim Aufschieben des Deckels auf die Motorwelle radial aufgeweitet werden muß.

Dazu ist aus der EP-PS 0 272 775 ein Montagehilfskörper bekannt, der zum erleichterten Montieren eines Gehäuseverschlußdeckels mit integriertem Radialwellendichtring dient. Der Montagehilfskörper besteht im wesentlichen aus einem radial sich erstreckenden Grundkörper aus Kunststoff mit einer radial innen angeformten zylindrischen Hülse zur Abstützung der Dichtlippe des Radialwellendichtringes, insbesondere für das Aufschieben des Gehäusedeckels mit seinem Dichtring auf das Ende einer Welle. Außerdem weist der Montagehilfskörper einen radial äußeren zweiten axialen, ringförmigen Zylinderansatz auf, der einen entsprechenden Absatz des Gehäuseverschlußdeckels umschließt und damit eine zentrische Ausrichtung der Dichtlippe des Radialwellendichtringes sicherstellt. Der Gehäuseverschlußdeckel wird im montierten Zustand über mehrere Schrauben mit dem Kurbelwellengehäuse einer Brennkraftmaschinen befestigt. Dazu müssen nach der Positionierung und Ausrichtung des Gehäuseverschlußdeckels die Befestigungsschrauben separat zugeführt werden.

Der Erfindung liegt die Aufgabe zugrunde, die Montage von Maschinenteilen, die mittels zusätzlicher Befestigungsmittel mit dem Maschinengehäuse verbunden werden, zu vereinfachen und vor allem eine vollautomatische Montage mittels Industrie-Roboter zu ermöglichen. Dazu gehört auch ein sicherer Transport und Lagerung solcher Maschinenteile.

Diese Aufgabe wird erfindungsgemäß durch einen Montagehilfskörper nach Patentanspruch 1 gelöst. Die Verwendung eines Montagehilfskörpers erhöht zwar die Herstellungskosten des Maschinenteiles, indem ja zusätzlich ein Montagehilfskörper bereitgestellt und mit dem Maschinenteil verbunden werden muß. Die Wiederverwendungsmöglichkeit solcher Montagehilfskörper hält diese Zusatzkosten jedoch in Grenzen. Der große technische und wirtschaftliche Vorteil ist darin zu sehen, daß die Befestigungsmittel für das Maschinenteil derart positioniert mittels des Montagehilfskörpers bereitgehalten werden, daß nach dem Zuführen des Maschinenteils in die Montageposition die Befestigungsmittel in ausgerichteter Lage verfügbar und in ihre funktionale Befestigungsposition bringbar sind.

Bevorzugt besteht der Montagehilfskörper aus einem Kunststoffkörper, der in einem Spritzverfahren einfach und kostengünstig in einer dem Maschinenteil angepaßten Form herstellbar ist. Ein solcher Montagehilfskörper hat ein geringes Gewicht und ist vielfach wiederverwendbar.

Der Montagehilfskörper besteht bevorzugt aus einem in der Hauptebene des Maschinenteils sich erstreckenden Grundkörper mit davon ausgehenden, das Maschinenteil umgreifenden und/oder in das Maschinenteil eingreifenden Ansätzen, die mit dem Maschinenteil leicht lösbar verbunden werden können. Meistens ausreichend und leicht zu handhaben ist dafür eine Steckverbindung.

Weiterhin wird vorgeschlagen, daß für die Befestigungsmittel im Montagehilfskörper Halterungen in Form von Durchbrechungen vorgesehen sind, in die die Befestigungsmittel einführbar und durchsteckbar positioniert werden können. Damit wird sichergestellt, daß die Befestigungsmittel bei der Montage mittels eines üblichen Werkzeuges erfaßt und durch den Montagehilfskörper bis in die Verbindungsposition mit dem Maschinengehäuse gebracht werden können.

Zur Vermeidung eines Verlustes der Befestigungsmittel während Transport und Lagerung wird angeregt, die Durchbrechungen im Montagehilfskörper zur lösbaren Aufnahme der Befestigungsmittel mit Arretierungshilfen auszubilden. Hierzu erscheint es weiterhin von Vorteil, wenn die Durchbrechungen zusätzliche Führungshilfen zum Positionieren während Transport und Lagerung sowie zum ausgerichteten Zuführen der Befestigungsmittel in das Maschinenteil bei der Montage aufweisen.

Weiterhin wird vorgeschlagen, daß die Erstreckung des Montagehilfskörpers etwa der Länge der Befestigungsmittel entspricht. Damit ist sichergestellt, daß für Transport und Lagerung die Befestigungsmittel nicht aus dem Montagehilfskörper vorstehen. Somit wird ein Stapeln der mit den Maschinenteilen bestückten Montagehilfskörper möglich. Dies ist besonders für das Ergreifen der Montagehilfskörper inclusive Maschinenteil mittels eines Industrie-Roboters von Bedeutung.

Bei erfindungsgemäßen Montagehilfskörpern für Gehäuseverschlußdeckel mit integriertem Radialwellendichtring und Durchgangslöchern für Befestigungsschrauben, insbesondere für Kurbelwellen-, Nockenwellen- und Getriebegehäuse von Brennkraftmaschinen, bestehend aus einem im wesentlichen radial sich erstreckenden Grundkörper mit mindestens einem axial sich erstreckenden ringförmigen Ansatz zur zentrischen Aufnahme des Gehäuseverschlußdeckels, wird vorgeschlagen, daß der Montagehilfskörper Halterungen zur Aufnahme und lageorientierten Positionierung der Befestigungsschrauben aufweist. Erfindungsgemäß sind damit die an sich für Gehäuseverschlußdeckel bekannten Montagehilfskörper dahingehend verbessert, daß die Befestigungsschrauben im Montagehilfskörper in ausgerichteter Lage aufgenommen und in dieser Position während Transport und Lagerung bis zur Montage gehalten werden, um dann mittels eines üblichen Werkzeuges unmittelbar durch die Gehäusedeckelbohrung in das Gewindeloch des Kurbelwellen- bzw. Getriebegehäuses eingeschraubt werden zu können.

Vorzugsweise ist im radial äußeren Umfangsbereich des Montagehilfskörpers ein axial abgewinkelter, bei der Montage als Abstützung gegenüber dem Kurbelwellengehäuse dienender Kragen vorgesehen. Dies ist von Vorteil, wenn die Befestigungsschrauben axial aus den Halterungen des Montagehilfskörpers heraus in die Gewindebohrungen des Kurbelwellengehäuses gedrückt werden.

Die Halterung für die Aufnahme je eines Befestigungsmittels besteht nach einem weiteren Gedanken der Erfindung aus jeweils einem im wesentlichen axial gerichteten, radial elastisch aufweitbaren Ansatz mit einer Durchgangsbohrung für eine Befestigungsschraube. Beim Einbringen der Befestigungsschraube in die Durchgangsbohrung weitet sich der Ansatz radial elastisch aufund hält diese nach dem Einbringen und Rückfedern des Ansatzes fest.

Der Ansatz kann nach einem weiteren Merkmal der Erfindung durch axial verlaufende Schlitze oder dgl. elastisch nachgiebig gemacht werden. Dadurch entstehen zungenförmige Ansätze. Zweckmäßigerweise besteht jede Halterung aus mindestens drei zungenförmigen, im wesentlichen axial gerichteten Ansätzen. Letztere weisen vorzugsweise Vertiefungen zur Aufnahme und Arretierung des Schraubenkopfes auf. Die Vertiefungen sind dabei so ausgebildet, daß die Befestigungsschrauben mit ihrem Kopf ein- und ausdrückbar sind.

In vorteilhafter Weise werden Befestigungsschrauben mit radial über den Schraubenkopf überstehenden Teilen, wie Vorsprünge, Flansche, Bunde oder dgl., verwendet, wobei die radial überstehenden Teile, wie z.B. der Bund einer Bundkopfschraube, in die Vertiefungen ein- und ausdrückbar sind.

Weiterhin vorteilhaft ist die Ausbildung der axial gerichteten Ansätze mit Verlängerungen, die sich in Richtung der Schraubenschäfte auf diese zu erstrecken. Damit ist eine zentrische Halterung der Schäfte der Befestigungsschrauben sichergestellt und die Schrauben werden in exakt ausgerichteter Position gehalten, so daß bei der Montage die Schrauben zentrisch zu den Gewindelöchern des Kurbelwellen- bzw. Getriebegehäuses im Montagehilfskörper gehalten werden.

Weiterhin wird erfindungsgemäß vorgeschlagen, daß bei dem Montagehilfskörper axial über das aufgenommene Maschinenteil bzw. den aufgenommenen Gehäuseverschlußdeckel in Richtung auf das Maschinengehäuse sich erstreckende Zentriernasen vorgesehen sind, die bei der Montage, insbesondere beim Zusammenfügen der zu montierenden Teile, ein lageorientiertes Ausrichten der Teile zueinander ermöglichen. Dafür ist es unbedeutend, ob die Zentriernasen in entsprechende Ausnehmungen des Maschinengehäuses eingreifen oder ob sich bei der Montage die Zentriernasen an vorstehenden Kanten des Maschinengehäuses orientieren. Für eine eindeutige Ausrichtung bzw. Zentrierung der Teile zueinander sollten mindestens zwei Zentriernasen am Montagehilfskörper vorgesehen sein.

Schließlich erscheint es angebracht, am Montagehilfskörper Arretierungsklemmen zur lagegerechten Verbindung mit dem Maschinenteil bzw. mit dem Gehäuseverschlußdeckel anzuformen, wobei mehrere Arretierungsklemmen die Positionier-Genauigkeit erhöhen. Zentriernasen und Arretierungsklemmen können dabei miteinander kombiniert werden, indem die Zentriernase Teil der Arretierungsklemme ist.

Die Erfindung ist in der Zeichnung anhand eines Ausführungsbeispieles dargestellt und wird im folgenden näher beschrieben.

Es zeigen:
- Figur 1: eine Ansicht eines Gehäuseverschlußdeckels für den getriebeseitigen Kurbelwellenausgang eines Kurbelwellengehäuses einer Brennkraftmaschine,
- Figur 2: eine Schnittdarstellung I-I des Gehäusedeckels nach Figur 1,
- Figur 3: eine Ansicht eines Montagehilfskörpers für den in den Figuren 1 und 2 dargestellten Gehäuseverschlußdeckel,
- Figur 4: eine Schnittdarstellung II-II des Montagehilfskörpers nach Figur 3,
- Figur 5: eine Ansicht des Montagehilfskörpers nach den Figuren 3 und 4 mit aufgestecktem Gehäuseverschlußdeckel nach den Figuren 1 und 2,
- Figur 6: eine Schnittdarstellung III-III gemäß Angaben in Figur 5,
- Figur 7: eine vergrößerte Schnittdarstellung der Einzelheit A gemäß Angabe in Figur 6 während der Montage,
- Figur8: die Einzelheit A nach Figur 6 nach der Montage.

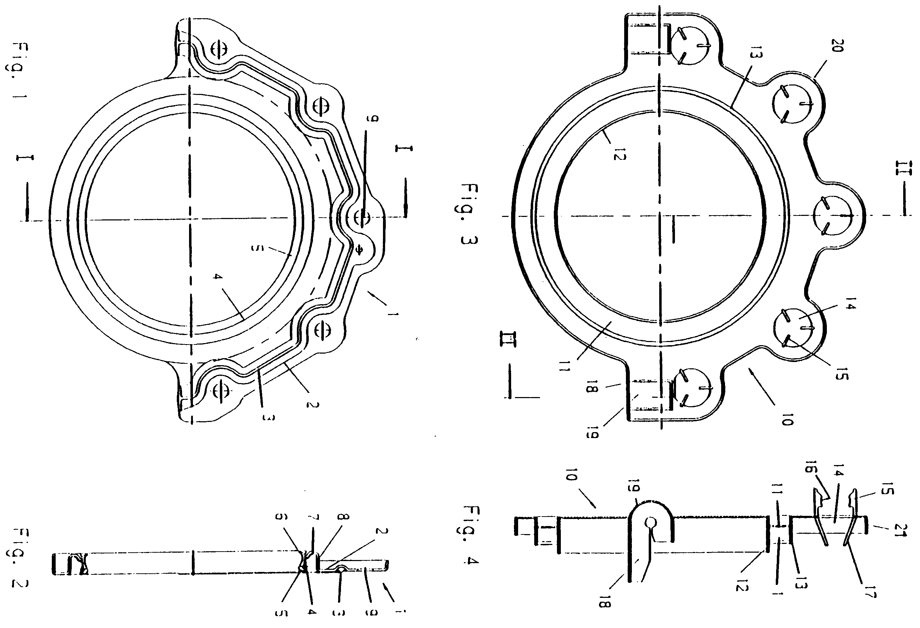

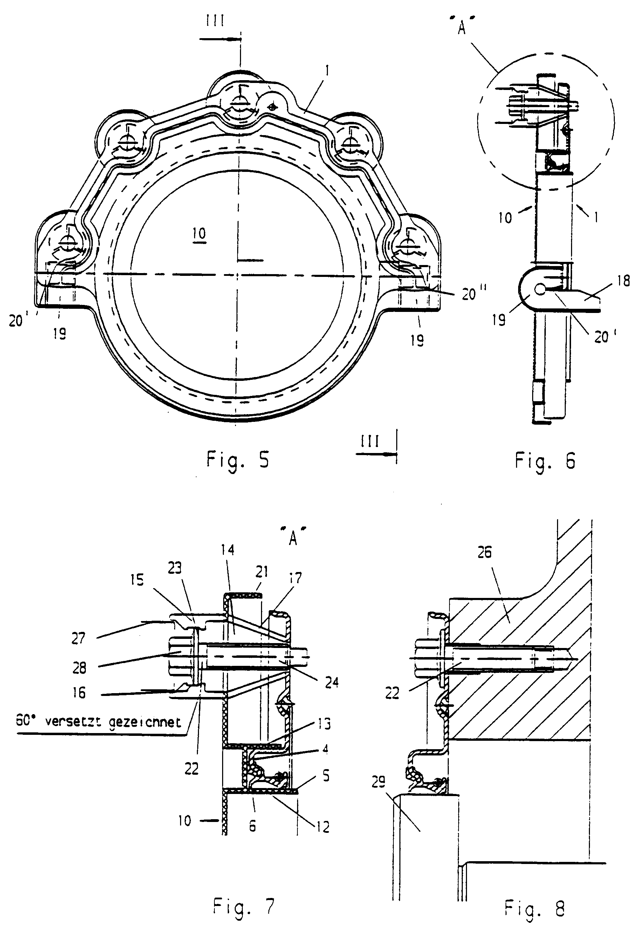

Der in den Figuren 1 und 2 dargestellte Gehäuseverschlußdeckel besteht aus einem tiefgezogenen Blechkörper mit einem Radialflansch 2, der im montierten Zustand am Kurbelwellengehäuse 26 einer Brennkraftmaschine (siehe Figur 8) zur flächigen Anlage kommt. Für die statische Abdichtung ist ein Dichtungswulst 3 aus Elastomer-Werkstoff vorgesehen. Im radial inneren Bereich des Gehäuseverschlußdeckels 1 ist ein Radialwellendichtring 4 aus Elastomer-Werkstoff angeformt, der zwei Dichtlippen 5 und 6 aufweist, die im Montagezustand unter radialer Spannung auf der Oberfläche der Kurbelwelle 29 (siehe Figur 8) aufliegen. Die Aufnahme des Radialwellendichtringes 4 erfolgt an einem Kragen 7 eines zylindrischen Absatzes 8. Für die Befestigung des Gehäuseverschlußdeckels 1 am Kurbelwellengehäuse 26 dienen durch die Bohrungen 9 steckbare, als Bundkopf-schrauben ausgeführte Befestigungsschrauben 22 (siehe Figur 7 und 8).

Für die automatische Montage des Gehäuseverschlußdeckels 1 dient ein Montagehilfskörper 10 aus einem Polyamid-Kunststoff, wie er in den Figuren 3 und 4 dargestellt ist. Der Montagehilfskörper 10 besteht aus einem Grundkörper 11, der sich im wesentlichen radial erstreckt und radial innen einen axial gerichteten Ansatz 12 in Form einer zylindrischen Hülse für die radiale Abstützung der Dichtlippen 5 und 6 des Gehäuseverschlußdeckels 1 (siehe Figur 2) während des Transports und der Lagerung sowie für das erleichterte Aufziehen auf die Kurbelwelle 29 aufweist. Ein zweiter, ebenfalls zylindrischer, axial gerichteter Ansatz 13 dient zum Aufstecken und zentrischen Halten des Montagehilfskörpers 10 auf dem Absatz 8 des Gehäuseverschlußdeckels 1. Entsprechend der Lage der Befestigungsschrauben 22 weist der Montagehilfskörper 10 Halterungen 14 auf, die aus jeweils drei zungenförmigen, im wesentlichen axial gerichteten Ansätzen 15 bestehen. Letztere besitzen nutförmige Vertiefungen 16 als Arretierungshilfe zur Aufnahme des Bundes 23 der Befestigungsschrauben 22 (siehe Figur 7). Außerdem weisen die Ansätze 15 als Führungshilfe dienende, sich in Richtung auf die Schraubenschäfte 24 (siehe Figur 7) erstreckende axiale Verlängerungen 17 auf. Der Montagehilfskörper 10 besitzt darüber hinaus zwei axial in Richtung auf den Gehäuseverschlußdeckel 1 gerichtete, hervorstehende Zentriernasen 18, die Teil zweier Arretierungsklemmen 19 sind. Am Außenumfang 20 des Montagehilfskörpers 10 ist ein axial abgewinkelter, als zusätzliche Abstützung dienender Kragen 21 vorgesehen.

Die Figuren 5 bis 7 zeigen den auf den Gehäuseverschlußdeckel 1 aufgesteckten Montagehilfskörper 10. Dabei umschließt der axiale Ansatz 13 des Montagehilfskörpers 10 den zylindrischen Absatz 8 des Gehäuseverschlußdeckels 1, während der hülsenförmige axiale Ansatz 12 des Montagehilfskörpers 10 sich in den Radialwellendichtring 4 des Gehäuseverschlußdeckels 1 unter gleichzeitiger radialer Aufweitung der Dichtlippen 5 und 6 erstreckt. Zusätzlich ist der Montagehilfskörper 10 mit seinen beiden Arretierungsklemmen 19 auf axial hervorstehende Kragenteile 20' und 20'' des Gehäuseverschlußdeckels 1 aufgesteckt, wobei die Zentriernase 18 des Montagehilfskörpers 10 eine eindeutige Ausrichtung und Lagesicherung des Gehäuseverschlußdeckels 1 zum Montagehilfskörper 10 bewerkstelligt.

Der aus Montagehilfskörper 10 und Gehäuseverschlußdeckel 1 bestehende Verbundkörper läßt sich lageorientiert stapeln und somit unproblematisch transportieren, lagern und mittels eines Industrie-Roboters ergreifen und in die Montageposition bringen.

Die in Figur 7 vergrößert dargestellte Einzelheit A zeigt insbesondere die Halterung 14 für die Befestigungsschrauben 22, die nach dem axialen Einführen mit ihrem Bund 23 in den Vertiefungen 16 der zungenförmigen Ansätze 15 arretiert gehalten werden. Mittels der Verlängerungen 17 werden die Schraubenschäfte 24 der Befestigungsschrauben 22 exakt ausgerichtet, so daß sie bei der Montage des Gehäuseverschlußdeckels 1 genau vor den Gewindebohrungen 25 des Kurbelwellengehäuses 26 (siehe Figur 8) leicht einschraubbar positioniert sind. Das Einschrauben der Befestigungsschrauben 22 erfolgt mittels üblicher, in der Zeichnung nur angedeuteter Werkzeuge 27, die beim Aufsetzen auf den Schraubenkopf 28 gleichzeitig die zungenförmigen Ansätze 15 radial nach außen aufweiten und damit den Bund 23 der Befestigungsschraube 22 freigeben, so daß die Befestigungsschraube 22 mit ihrem Schraubenschaft 24 in die Gewindebohrung 25 des Kurbelwellengehäuses 26 eingeschraubt werden kann.

Die anhand dieses Ausführungsbeispiels dargestellten Vorteile der Erfindung lassen sich prinzipiell auch auf viele Maschinenteile, die zur Befestigung zusätzliche Befestigungsmittel benötigen, übertragen. Beispielsweise können das einfache Verschlußdeckel von Getriebegehäusen sein; auch ist es denkbar, Ventildeckelhauben und Ölwannen von Brennkraftmaschinen mit den erfindungsgemäßen Montagehilfskörpern seitens des Deckel- bzw. Ölwannenherstellers zu versehen, um die oben erwähnten Vorteile bei Transport. Lagerung und vor allem bei einer vollautomatischen Montage zu erzielen.

## Patentansprüche

1. Montagehilfskörper (10) zur Aufnahme von Maschinenteilen (1) in ausgerichteter Lage, die mittels zusätzlicher Befestigungsmittel (22) mit einer Maschine zu verbinden sind, bestehend aus einem mit dem Maschinenteil (1) leicht lösbar verbindbaren Hilfskörper (10), der nach der Montage des Maschinenteils (1) entfernbar ist, gekennzeichnet durch am Montagehilfskörper (10) angeordnete Halterungen (14) für die lageorientierte Aufnahme und Arretierung der Befestigungsmittel (22) in ausgerichteter Lage.

2. Montagehilfskörper nach Anspruch 1, dadurch gekennzeichnet, daß der Montagehilfskörper (10) aus Kunststoffbesteht.

3. Montagehilfskörper nach den Ansprüchen 1 und 2, gekennzeichnet durch einen in der Hauptebene des Maschinenteils (1) sich erstreckenden Grundkörper (11) mit davon ausgehenden, das Maschinenteil (1) umgreifenden und/oder in das Maschinenteil (1) sich erstreckenden Ansätzen (12, 13), die mit dem Maschinenteil (1) leicht lösbar verbindbar sind.

4. Montagehilfskörper nach den Ansprüchen 1 bis 3, dadurch gekennzeichnet, daß die Verbindung zwischen Maschinenteil (1) und Montagehilfskörper (10) eine Steckverbindung ist.

5. Montagehilfskörper nach den Ansprüchen 1 bis 4, dadurch gekennzeichnet, daß für die Befestigungsmittel (22) Halterungen (14) in Form von Durchbrechungen vorgesehen sind, in die die Befestigungsmittel (22) einführbar und durchsteckbar sind.

6. Montagehilfskörper nach den Ansprüchen 1 bis 5, dadurch gekennzeichnet, daß die Halterungen (14) Arretierungshilfen (15, 16) zur lösbaren Aufnahme der Befestigungsmittel (22) aufweisen.

7. Montagehilfskörper nach den Ansprüchen 1 bis 6, dadurch gekennzeichnet, daß die Halterungen (14) Führungshilfen (17) zum Positionieren während Lagerung und Transport sowie zum ausgerichteten Zuführen der Befestigungsmittel (22) in das Maschinenteil (1) bei der Montage aufweisen.

8. Montagehilfskörper nach den Ansprüchen 1 bis 7, dadurch gekennzeichnet, daß die Erstreckung des Montagehilfskörpers (10) etwa der Länge der Befestigungsmittel (22) entspricht, so daß diese innerhalb des Montagehilfskörpers (10) aufgenommen werden können.

9. Montagehilfskörper (10) nach Anspruch 1 zur Aufnahme von Gehäuseverschlußdeckeln (1) mit integriertem Radial-Wellendichtring (4) und Durchgangslöchern (9) mit Befestigungsschrauben (22), insbesondere für Kurbelwellen-, Nockenwellen- und Getriebehäuse von Brennkraftmaschinen, mit einem im wesentlichen radial sich erstreckenden Grundkörper (11) mit mindestens einem axial sich erstreckenden ringförmigen Ansatz (8) zur zentrischen Aufnahme des Gehäuseverschlußdeckels (1), wobei die Halterungen (14) zur Aufnahme und lageorientierten Positionierung der Befestigungsschrauben (22) in ausgerichteter Lage am Grundkörper (11) vorgesehen sind.

10. Montagehilfskörper nach Anspruch 9, dadurch gekennzeichnet, daß im radial äußeren Umfangsbereich (20) des Grundkörpers (11) ein axial abgewinkelter, bei der Montage als Abstützung gegenüber dem Kurbelwellengehäuse (26) dienender Kragen (21) vorgesehen ist.

11. Montagehilfskörper nach den Ansprüchen 9 und 10, dadurch gekennzeichnet, daß jede Halterung (14) für die Aufnahme je einer Befestigungsschraube (22) aus einem im wesentlichen axial gerichteten, radial elastisch aufweitbaren Ansatz mit einer Durchgangsbohrung für die Befestigungsschraube (22) besteht.

12. Montagehilfskörper nach Anspruch 11, dadurch gekennzeichnet, daß jeder Ansatz zur Aufnahme je einer Befestigungsschraube (22) mit axial verlaufenden Schlitzen oder dgl. versehen ist.

13. Montagehilfskörper nach Anspruch 12, dadurch gekennzeichnet, daß jede Halterung (14) für die Aufnahme je einer Befestigungsschraube (22) aus jeweils mindestens drei zungenförmigen, im wesentlichen axial gerichteten Ansätzen (15) besteht.

14. Montagehilfskörper nach den Ansprüchen 9 bis 13, dadurch gekennzeichnet, daß die axial gerichteten Ansätze (15) Vertiefungen (16) zur Arretierung des Schraubenkopfes (28) aufweisen, in welche die Schraubenköpfe (28) der Befestigungsschrauben (22) ein- und ausdrückbar sind.

15. Montagehilfskörper nach den Ansprüchen 9 bis 14, gekennzeichnet durch die Verwendung von Befestigungsschrauben (22) mit radial über den Schraubenkopf (28) überstehenden Teilen, wie Vorsprünge, Flansche, Bunde (23) oder dgl., wobei die radial überstehenden Teile in die Vertiefungen (16) ein- und ausdrückbar sind.

16. Montagehilfskörper nach den Ansprüchen 9 bis 15, dadurch gekennzeichnet, daß die axial gerichteten Ansätze (15) Verlängerungen (17) aufweisen, die sich zur zentrischen Positionierung der Befestigungsschrauben (22) in Richtung auf die Schraubenschäfte (24) erstrecken.

17. Montagehilfskörper nach den Ansprüchen 1 bis 16, gekennzeichnet durch axial über das Maschinenteil bzw. den Gehäuseverschlußdeckel (1) hinaus sich in Richtung auf das Maschinengehäuse (26) erstreckende Zentriernasen (18), die bei der Montage, insbesondere beim Zusammenfügen der zu montierenden Teile (1, 10, 26), ein lageorientiertes Ausrichten der Teile (1, 10, 26) zueinander ermöglichen.

18. Montagehilfskörper nach den Ansprüchen 1 bis 17, dadurch gekennzeichnet, daß zusätzliche Arretierungsklemmen (19) zur lagegerechten Verbindung mit dem Maschinenteil bzw. mit dem Gehäuseverschlußdeckel (1) angeformt sind.

19. Montagehilfskörper nach den Ansprüchen 1 bis 18, dadurch gekennzeichnet, daß die Zentriernase (18) Teil der Arretierungsklemme (19) ist.

## Claims

1. Assembly aid (10) for receiving machine parts (1) in an aligned position, said assembly aid being connected to a machine by means of additional attachment means (22) and consisting of an assembly aid (10) which be attached to the machine part (1) in an easily detachable manner and which may be removed after assembly of the machine part (1), characterised by fixing devices (14) arranged on the assembly aid (10) for the positionally-orientated receiving and fixing of the attachment means (22) in an aligned position.

2. Assembly aid according to claim 1, characterised in that the assembly aid (10) is made of plastic material.

3. Assembly aid according to claims 1 and 2, characterised by a basic body (11) extending in the main plane of the machine part (1), having projections (12, 13) proceeding therefrom and encompassing the machine part (1) and/or extending into the machine part (1), said projections being connectable to the machine part (1) in an easily detachable manner.

4. Assembly aid according to claims 1 to 3, characterised in that the connection between the machine part (1) and the assembly aid (10) is a plug-in connection.

5. Assembly aid according to claims 1 to 4, characterised in that fixing devices (14) for the attachment means (22) are provided in the form of openings into which the attachment means (22) may be introduced and pushed through.

6. Assembly aid according to claims 1 to 5, characterised in that the fixing devices (14) have fixing aids (15, 16) for receiving the attachment means (22) in a detachable manner.

7. Assembly aid according to claims 1 to 6, characterised in that the fixing devices (14) have guiding aids (17) for positioning during storage and transportation and also for aligned introduction of the attachment means (22) into the machine part (1) during assembly.

8. Assembly aid according to claims 1 to 7, characterised in that the extension of the assembly aid (10) corresponds roughly to the length of the attachment means (22) so that the latter may be received within the auxiliary assembly body (10).

9. Assembly aid (10) according to claim 1 for receiving casing caps (1) with an integrated radial packing ring (4) and clearance holes (9) with attachment screws (22) especially for crankshaft, camshaft and gearbox casings for internal combustion engines with a basic body (11) extending in an essentially radial manner, with at least one annular projection (8) extending axially for receiving the casing caps (1), the fixing devices (14) being provided in aligned position on the basic body (11) for receiving and positioning of the attachment screws (22) in a positonally-orientated manner.

10. Assembly aid according to claim 9, characterised in that there is provided in the radially outer circumference region (20) of the basic body (11) a collar (21) which is axially angled and serving as a support relative to the crankshaft housing (26) during assembly.

11. Assembly aid according to claims 9 to 10, characterised in that each fixing device (14) for receiving one attachment screw (22) respectively consists of an essentially axially directed, radially and ealstically expanding projection with a clearance boring for the attachment screw (22).

12. Assembly aid according to claim 11, characterised in that each projection is provided with axially extending slots or similar for receiving one attachment screw (22) respectively.

13. Assembly aid according to claim 12, characterised in that each fixing device (14) for receiving an attachment screw (22) respectively consists of at least three tongue-shaped, essentially axially directed projections (15).

14. Assembly aid according to claims 9 to 13, characterised in that the axially directed projections (15) have recesses (16) for fixing the screw head (28) into which the screw heads (28) of the attachment screws (22) may be pressed in and out.

15. Assembly aid according to claims 9 to 14, characterised by the use of attachment screws (22) with parts projecting radially above the screw head (28), such as projections, flanges, collars (23) or similar, the radially projecting parts having the capacity to be pushed into and out of the recesses (16).

16. Assembly aid according to claims 9 to 15, characterised in that the axially directed projections (15) have extensions (17) which extend in the direction of the screw shafts (24) for centrally positioning the attachment screws (22).

17. Assembly aid according to claims 1 to 16, characterised by centering noses (18) extending axially above the machine part or casing cap (1) in the direction of the machine housing (26), said noses making possible a positionally-orientated alignment of the parts (1, 10, 26) to one another during assembly, especially while joining the parts to be assembled (1, 10, 26).

18. Assembly aid according to claims 1 to 17, characterised in that additional fixing clamps (19) are attached for precisely positioned connection to the machine part or to the casing cap (1).

19. Assembly aid according to claims 1 to 18, characterised in that the centring nose (18) is a part of the fixing clamp (19).

## Revendications

1. Systeme d'aide au montage (10) pour la réception de pièces de machine (1) dans une position orientée, qui sont à connector à l'aide de moyens de fixation additionnels (22) à une machine, ledit organe étant constitué d'un systeme d'aide (10) qui peut être connecté de manière facilement démontable à la pièce de machine (1), ledit orange d'aide (10) pouvant être éloigné après le montage de la pièce de machine (1), caractérisé par des éléments de maintien (14) disposés sur l'organe d'aide au montage (10) pour la réception orientée en position et le blocage des moyens de fixation (22) dans la position orientée.

2. Systeme d'aide au montage selon la revendication 1, caractérisé en ce que l'organe d'aide au montage (10) est réalisé en un matériau plastique.

3. Systeme d'aide au montage selon les revendications 1 et 2, caractérisé par un corps de base (11) s'étendant dans le plan principal de la pièce de machine (1) et pourvu d'appendices (12, 13) partant dudit corps (11), saisissant la pièce de machine (1) et/ou s'étendant dans la pièce de machine (1), lesdits appendices pouvant être connectés de manière facilement dèmontable à la pièce de machine (1).

4. Systeme d'aide au montage selon les revendication 1 à 3, caractérisé en ce que la liaison entre la pièce de machine (1) et l'organe d'aide au montage (10) est une connexion par enfichage.

5. Systeme d'aide au montage selon les revendications 1 à 4, caractérisé en ce que, pour les moyens de fixation (22), il est prévu des éléments de maintien (4) sous la forme de percage dans lesquels les moyens de fixation (22) peuvent être conduits et insérés.

6. Systeme d'aide au montage selon les revendications 1 à 5, caractérisé en ce que les éléments de maintien (14) comprennent des aides au blocage (15, 16) pour une réception démontable des moyens de fixation (22).

7. Systeme d'aide au montage selon les revendications 1 à 6, caractérisé en ce que les éléments de maintien (14) comportent des aides au guidage (17) pour un positionnement pendant le montage et le transport ainsi que pour amener de mainière orientée les moyens de fixation (22) dans la pièce de machine (1) lors du montage.

8. Systeme d'aide au montage selon les revendications 1 à 7, caractérisé en ce que l'extension de l'organe d'aide au montage (10) correspond environ à la longueur des moyens de fixation (22) de telle sorte que ces derniers peuvent être recus à l'intérieur de l'organe d'aide au montage (10).

9. Systeme d'aide au montage (10) selon la revendications 1, pour la réception de couvercles de fermeture de carter (1) pourvus d'une bague d'étanchéité d'arbre radiale intégrée (4) et de trous de passage (9) avec des vis de fixation (22), en particulier pour carter de vilebrequin, d'arbre à came et de boîte de vitesse de moteur à combustion interne, comportant un corps de base (11) s'étendant sensiblement radialement avec au moins un appendice annulaire (8) s'étendant axialement pour une réception centrale du couvercle de fermeture de carter (1), les éléments de maintien (14) étant prévus sur le corps de base (11) pour la réception et le positionnement orienté des vis de fixation (22) dans une position orientée.

10. Systeme d'aide au montage selon la revendications 9, caractérisé en ce que dans la zone périphérique radialement extérieure (20) du corps de base (11), est prévue une collerette (21) repliée axialement servant lors du montage en tant qu'appui par rapport au boîtier de vilebrequin (26).

11. Systeme d'aide au montage selon les revendications 9 à 10, caractérisé en ce que chaque élément de maintien (14) pour la réception d'une vis de fixation est constitué d'un appendice orienté sensiblement axialement et élargissable élastiquement radialement qui présente un alésage de passage pour la vis de fixation (22).

12. Systeme d'aide au montage selon la revendications 11, caractérisé en ce que chaque appendice pour la réception d'une vis de fixation (22) est pourvu de fentes ou similaire s'étandant axialement.

13. Systeme d'aide au montage selon la revendications 12, caractérisé en ce que chaque élément de maintien (14) pour la réception d'une vis de fixation (22) est constitué respectivement à partir d'au moins trois appendices (15) en forme de languettes orientès sensiblement axialement.

14. Systeme d'aide au montage selon les revendications 9 à 13, caractérisé en ce que les appendices orientés axialement (15) comprennent des évidements (16) pour le blocage de la tête de vis (28), dans lesquels les têtes de vis (28) des vis de fixation (22) peuvent être enfoncées et extraites.

15. Systeme d'aide au montage selon les revendications 9 à 14, caractérisé par l'utilisation de vis de fixation (22) ayant des parties faisant saillie radialement au-delà de la tête de vis (28) tels que des protubérances, brides, embases (23) ou similaire, les parties faisant saillie radialement pouvant être enfoncées ou extraites des évidements (16).

16. Systeme d'aide au montage selon les revendications 9 à 15, caractérisé en ce que les appendices orientés axialement (15) comprennent des prolongements (17), qui s'étendent pour un positionnement centré des vis de fixation (22) en direction des chevilles de vis (24).

17. Systeme d'aide au montage selon les revendications 1 à 16, caractérisé par des tenons de centrage (18) s'étendant axialement sur la pièce de machine respectivement le couvercle de fermeture de carter (1) vers l'extérieur en direction du carter de machine (26), les tenons de centrage (18) lors du montage, en particulier lors d'un assemblage de la pièce à monter (1, 10, 26), permettant une disposition orientée en position des pièces (1, 10, 26) les unes par rapport aux autres.

18. Systeme d'aide au montage selon les revendications 1 à 17, caractérisé en ce que de pinces de blocage additionnelles (19) sont formées pour une connexion en position correcte avec la pièce de machine respectivement avec le couvercle de fermeture du carter (1).

19. Systeme d'aide au montage selon les revendications 1 à 18, caractérisé en ce que le tenon de centrage (18) forme une partie de la pince de blocage (19).
